# EUROPÄISCHE PATENTSCHRIFT

(11) **EP 2 907 703 B1**
(45) Veröffentlichungstag und Bekanntmachung des Hinweises auf die Patenterteilung: **26.12.2018**
(21) Anmeldenummer: 14004034.6
(22) Anmeldetag: 28.11.2014
(51) Int. Cl.: B60R 21/13, B60R 21/215

(54) **Abdeckung für Überrollkörper**
Cover for roll over body
Revêtement pour arceau de sécurité

(30) Priorität: 12.02.2014 DE 102014001793
(43) Veröffentlichungstag der Anmeldung: 19.08.2015
(73) Patentinhaber: K.L. Kaschier- und Laminier GmbH, 48455 Bad Bentheim-Gildehaus (DE)
(72) Erfinder: Roring, Albert, 48599 Gronau-Epe (DE); Dr. Rembert Schulze Wehninck, 82327 Tutzing (DE)
(74) Vertreter: Cohausz Hannig Borkowski Wißgott

(56) Entgegenhaltungen:
- EP-A1- 1 393 994
- EP-A1- 2 096 006
- DE-A1-102006 035 208
- DE-A1-102008 031 835
- DE-A1-102012 001 461

## Beschreibung

Die Erfindung betrifft eine Überrollkörperabdeckung eines hochfahrbarem Überrollkörpers eines Kraftfahrzeugs.

Es ist bekannt, hinter den Sitzen eines Kraftfahrzeuges Überrollbügel höhenunveränderlich fest zu installieren. Darüber hinaus ist es bekannt, Überrollkörper im Heckbereich eines Kraftfahrzeugs so weit zu versenken, dass sie im unaktiven Zustand nicht sichtbar sind und bei einem Unfall sensorgesteuert aktiv hochfahren, wie dies aus der EP 1 857 332 A2 bekannt ist. Hierbei besteht oberhalb des heruntergefahrenen Überrollkörpers ein Ausschnitt, durch den der Überrollbügel nach oben hindurchfahren kann und der bei abgesenktem Überrollkörper durch eine Klappe abgedeckt ist. Damit diese Klappe auch dann sicher öffnet, wenn sie durch Schnee oder Eis festgefroren ist, wird in der EP 1 857 332 A2 vorgeschlagen, für das Öffnen der Klappe eine mechanische Vorrichtung vorzusehen, die sensorgesteuert die Klappe rechtzeitig öffnet. Eine solche Konstruktion ist verhältnismäßig aufwendig und funktionsanfällig. Die DE 10 2008 031 835 A1 offenbart eine Überrollkörperabdeckung gemäß dem Oberbegriff des Anspruchs 1.

Aufgabe der Erfindung ist es, eine Abdeckung eines aktiv hochfahrbaren Überrollkörper eines Kraftfahrzeugs zu schaffen, die ohne zusätzliche mechanische Bewegungseinrichtungen stets sicher öffnet.

Diese Aufgabe wird durch eine Überrollkörperabdeckung mit den Merkmalen des Anspruchs 1 gelöst.

Ein solcher, an seinen Rändern aufreißbarer Bereich insbesondere Klappe einfacher Konstruktion öffnet sich unabhängig von der Witterung mit absoluter Sicherheit und ist zudem im ungeöffneten Zustand unsichtbar. Ferner ist eine mechanische Öffnungskonstruktion nicht erforderlich.

Durch das erfinderische Merkmal, dass der Aufreißbereich über ein textiles Scharnier an dem den Aufreißbereich umgebenden Material der Abdeckung angelenkt ist/sind, ist sichergestellt, dass zum einen eine sichere Funktion besteht und zum anderen, dass der Aufreißbereich nach seinem Aufreißen nicht davonfliegt und nicht zersplittert, sondern weiterhin an der Abdeckung fest bleibt.

Hierbei kann für jeden Überrollkörper ein Aufreißbereich in der Abdeckung angeordnet sein. Darüber hinaus gemäß der Erfindung, wenn die Abdeckung, in der sich der Aufreißbereich befindet, zusätzlich zu dem oder den Überrollkörpern ein in den Heckbereich eingefahrenes Cabrioverdeck, ein Kfz.-Dach oder ein Kfz.-Dachteil(e) überdeckt.

Hierbei ist eine sichere Funktion dann gegeben, wenn die Abdeckung und der Aufreißbereich ein Flächenmaterial aus Kunststoff aufweisen, das ein textiles Flächenelement (Gewebe oder Gewirke) trägt, das Opferfäden aufweist, die zur Scharnierachse im Wesentlichen rechtwinklig oder schräg verlaufen und bei Auslösen des Überrollkörpers im Bereich des Scharniers reißen, und wobei das textile Flächenelement zudem Stoppfäden aufweist, die beim Auslösen des Überrollkörpers ein Verschwenken des Aufreißbereichs um die Scharnierachse zulassen, ohne im Bereich des Scharniers zu reißen, um nach dem Auslösen des Überrollkörpers den Aufreißbereich sicher zu halten.

Auch ist hierbei von Vorteil, wenn nur im Bereich des Scharniers die nicht reißenden Stoppfäden wellen- und/oder schlaufenförmig verdichtet angeordnet sind und damit dort eine größere Länge aufweisen als in den Bereichen außerhalb des Scharniers. Hierbei kann der wellen- und/oder schlaufenförmig verdichtete Bereich sich in und/oder unterhalb der Ebene des textilen Flächenelements befinden.

Weitere konstruktive und funktionelle Verbesserungen sind dann gegeben,
- wenn die nicht reißenden Stoppfäden in den Bereichen außerhalb des Scharniers im Wesentlichen gerade verlaufen und zwischen den einzelnen Stoppfäden so große Zwischenräume bilden, dass das Kunststoffmaterial des Abdeckungsbereichs in diesen Zwischenräumen Halt findet.
- wenn im Bereich des Scharniers die Stoppfäden innerhalb des textilen Flächenelements einen den Scharnierbereich überdeckenden schmalen, zur Scharnierachse parallelen Streifen hoher Fadendichte bilden.
- wenn zwei oder mehr unterschiedliche Arten von Opferfäden im textilen Flächenelement bestehen mit unterschiedlicher Länge und/oder Stärke, so dass bei dem Öffnen und Drehen des Aufreißbereichs zumindest eine Opferfadenart früher reißt als eine andere Opferfadenart.
- wenn bei drei oder mehr unterschiedlichen Arten von Opferfadenarten die Opferfadenarten beim Öffnen zeitlich nacheinander reißen.
- wenn die Textile mit einer Beschichtung insbesondere einem Vlies oder Folie versehen insbesondere verklebt ist.

Ein Ausführungsbeispiel der Erfindung ist in den Zeichnungen schematisch dargestellt und wird im Folgenden näher beschrieben. Es zeigen
- Fig. 1: einen senkreichten Schnitt durch eine Abdeckung mit textil verstärkter Aufreißklappe und
- Fig. 2: einen vergrößerten Ausschnitt der in der Abdeckung und der Klappe liegenden Fäden.

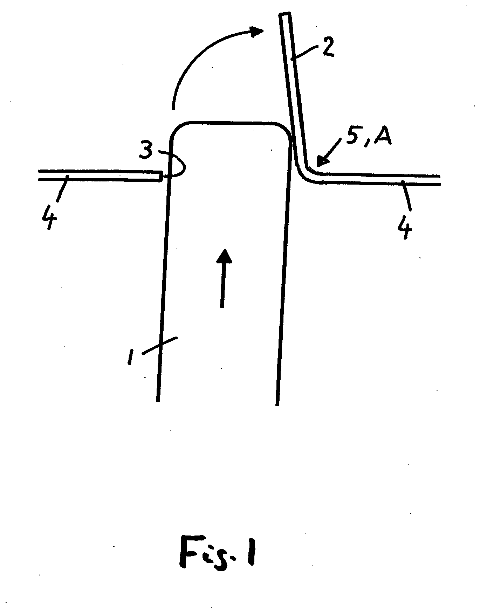

In Fig. 1 ist schematisch der Moment dargestellt, in dem ein Überrollkörper 1 eines Kraftfahrzeugs insbesondere aktiv nach oben fährt und hierbei den über ihm befindlichen Aufreißbereich 2 an drei Rändern 3 aus der Abdeckung 4 aufgerissen hat. Hierbei bilden die aufreißbaren Ränder Sollbruchlinien. Unter einem "Aufreißbereich" wird auch eine Aufreißklappe verstanden.

Der Aufreißbereich 2 ist vorzugsweise rechteckförmig und besitzt hierbei drei aufreißbare Ränder 3. Der vierte Rand des Aufreißbereichs bildet ein Scharnier 5, um das der Aufreißbereich 2 nach oben verschwenkt, wenn er durch den Überrollkörper 1 aufgestoßen wird. Damit der Aufreißbereich 2 beim Durchstoßen des Überrollkörpers und Hochschwenken von der Abdeckung 4 nicht abgerissen wird, sondern das Gelenk bzw. Scharnier den Aufreißbereich sicher an der Abdeckung 4 hält, ist das Scharnier 5 ein textiles Scharnier, mit dem im Folgenden beschriebenen Eigenschaften:
Die Abdeckung 4 eines Überrollkörpers mit mindestens einem Aufreißbereich 2 besteht aus einem plattenförmigen Kunststoffmaterial, auf dessen Rückseite ein textiles Flächenelement eingeschmolzen ist, das aus einer Textile (Gewebe oder Gewirke) besteht. Statt eines Einschmelzens kann das textile Flächenelement mit Kunststoff getränkt oder beschichtet werden, um die Abdeckung zumindest im Aufreißbereich und um den Aufreißbereich herum zu bilden. Zusätzlich sind Stoppfäden 11 und Opferfäden 12 innerhalb des textilen Flächenelements angeordnet. Die Stoppfäden 11 haben die Aufgabe, den Aufreißbereich 2 nach dem Aufreißen und während und nach dem Hochklappen sicher festzuhalten, so dass sie nicht wegfliegt. Dagegen sollen die Opferfäden 12 reißen, um ein leichtes Verschwenken bzw. Hochklappen des Aufreißbereichs 2 zu ermöglichen. Eine ausreichend funktionsfähige Ausführung wird aber auch dann erreicht, wenn die Opferfäden fehlen.

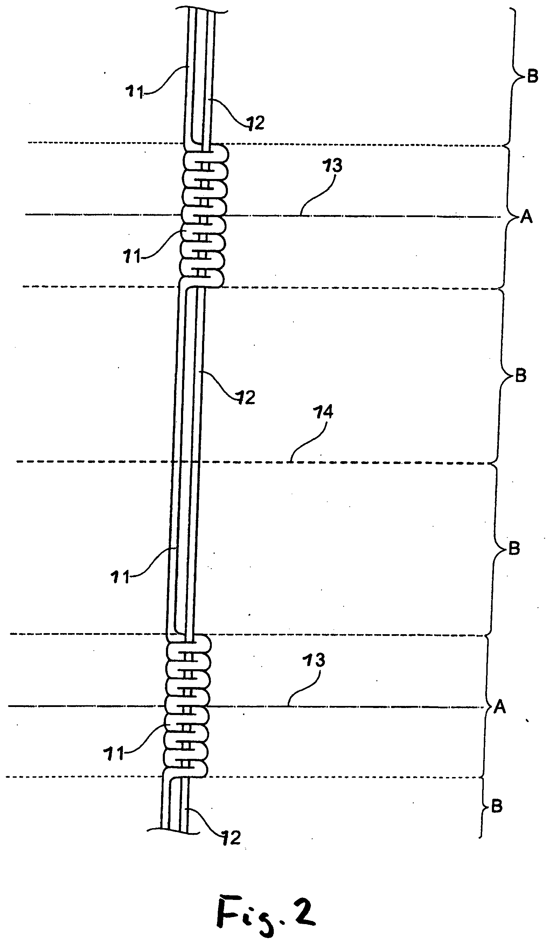

Die schematische Darstellung nach Fig. 2 zeigt nur einen einzigen Stoppfaden 11, mit daneben liegendem Opferfaden 12 gleicher Erstreckungsrichtung, wobei die übrigen Fäden der Textilie nicht dargestellt sind. Die Achse 13 des Scharniers liegt rechtwinklig zur Erstreckungsrichtung der Fäden 11 und 12 und beidseitig und in der Scharnierachse 13 befindet sich der Scharnierbereich A. Außerhalb des Scharnierbereichs A ist der Bereich des textilen Flächenelements mit B bezeichnet.

Im Scharnierbereich A laufen die Opferfäden 12 im Wesentlichen unverändert und unverdichtet quer zur Scharnierachse 13 im Wesentlichen gerade weiter, während die Stoppfäden 11 im Scharnierbereich A verdichtet angeordnet sind, d. h. sie haben dort eine wesentlich größere Länge als die Opferfäden 12. Das Verdichten der Stoppfäden 11 wird dadurch erreicht, dass sie wellenförmig oder schlaufenförmig im Scharnierbereich A angeordnet sind. Unter Wellen und Schlaufen werden aber auch schlangenförmige, mäanderförmige, schraubenförmige oder wickelförmige Formen des Stoppfadens 11 verstanden.

In den zwischen den Scharnierbereichen A liegenden Bereichen B verlaufen die Stoppfäden 11 dagegen im Wesentlichen unverdichtet und damit im Wesentlichen parallel zu den Opferfäden 12 gerade, so dass in den Bereichen B außerhalb des Scharnierbereichs A die Stoppfäden weniger dicht liegen und damit das Kunststoffmaterial der Abdeckung 4 zwischen die Fäden besser gelangt und dort das textile Flächenelement im Kunststoff besser haftet.

Vorzugsweise wird das textile Flächenelement als Bahnenware hergestellt mit vielen Bereichen A und B quer zur Bahnenlängsrichtung immer wieder aufeinander folgend, so dass die Bahnenware nach ihrer Herstellung in einzelne Abschnitte getrennt wird (Trennlinie 14), wobei jeder Abschnitt für einen Aufreißbereich/Aufreißklappe 2 Verwendung findet.

In der schematischen Zeichnung ist der Opferfaden 12 in der Weise dargestellt, dass er die vom Stoppfaden 11 im Scharnierbereich A gebildeten Wellen durchdringt. Stattdessen kann der Opferfaden aber auch seitlich des verdichteten Bereichs des Stoppfadens oder über oder unter diesem Bereich liegen.

Bei einer weiteren Ausführung sind unterschiedliche Arten von Opferfäden 12 in dem textilen Flächenelement angeordnet. So besteht neben den zuerst reißenden Opferfäden mindestens eine weitere Art von Opferfäden, die aufgrund ihrer größeren Stärke und/oder größeren Länge später reißen. Es können hierbei sogar drei oder mehr Arten nebeneinander im Flächenelement angeordnet sein, die in ihrer Stärke und/oder Länge von Art zu Art zunehmen, so dass ein kontinuierliches zeitliches Reißen nacheinander erfolgt.

Die verwendete Textile ist vorzugsweise mit einer Beschichtung insbesondere einem Vlies oder Folie versehen insbesondere verklebt, bevor die Textile mit Kunststoff getränkt, beschichtet oder eingeschmolzen wird.

## Patentansprüche

1. Überrollkörperabdeckung (4) eines hochfahrbaren Überrollkörpers eines Kraftfahrzeugs (1), wobei, in der Abdeckung (4) oberhalb des Überrollkörpers (1) mindestens ein Aufreißbereich (2) angeordnet ist, der im aufgerissenen Zustand eine Durchtrittsöffnung für den oder die Überrollkörper (1) frei gibt, und wobei, der Aufreißbereich (2) mit mindestens einem Rand ein Scharnier (5) bildet und die außerhalb des Scharniers befindlichen Ränder oder Randgebiete des Aufreißbereichs Sollbruchlinien bilden, **dadurch gekennzeichnet,**
- **dass** der/die Aufreißbereich(e) (2) über mindestens ein textiles Scharnier (5) an dem den Aufreißbereich (2) umgebenden Material der Abdeckung (4) angelenkt ist/sind,
- **dass** in der Abdeckung aus Kunststoff zumindest im Bereich nahe dem Scharnier und im Scharnierbereich ein textiles Flächenelement im Kunststoff eingebettet ist, und
- **dass** die Abdeckung (4) zusätzlich zu dem oder den Überrollkörpern (1) ein in einen Heckbereich eingefahrenes Cabrioverdeck, ein Kfz.-Dach oder ein Kfz.-Dachteil(e) überdeckt.

2. Abdeckung nach Anspruch 1, **dadurch gekennzeichnet, dass** für jeden Überrollkörper (1) mindestens ein Aufreißbereich (2) in der Abdeckung angeordnet ist.

3. Abdeckung nach Anspruch 1, **dadurch gekennzeichnet, dass** die Abdeckung (4) und der Aufreißbereich (2) ein Flächenmaterial aus Kunststoff aufweisen, das das textile Flächenelement trägt, das Opferfäden (12) aufweist, die zur Scharnierachse im Wesentlichen rechtwinklig oder schräg verlaufen und bei Auslösen des Überrollkörpers (1) im Bereich (A) des Scharniers (5) reißen.

4. Abdeckung nach einem der vorherigen Ansprüche, **dadurch gekennzeichnet, dass** das textile Flächenelement Stoppfäden (11) aufweist, die beim Auslösen des Überrollkörpers ein Verschwenken des Aufreißbereichs (2) um die Scharnierachse (13) zulassen, ohne im Bereich des Scharniers (5) oder der Anbindungsstruktur zu reißen, um nach dem Auslösen des Überrollkörpers den Aufreißbereich (2) sicher zu halten.

5. Abdeckung nach Anspruch 4, **dadurch gekennzeichnet, dass** nur im Bereich (A) des Scharniers (5) die nicht reißenden Stoppfäden (11) wellen- und/oder schlaufenförmig verdichtet angeordnet sind und damit dort eine größere Länge aufweisen als in den Bereichen (B) außerhalb des Scharniers.

6. Abdeckung nach Anspruch 5, **dadurch gekennzeichnet, dass** der wellen- und/oder schlaufenförmig verdichtete Bereich sich in und/oder unterhalb der Ebene des textilen Flächenelements befindet.

7. Abdeckung nach einem der Ansprüche 3 bis 6, **dadurch gekennzeichnet, dass** die nicht reißenden Stoppfäden (11) in den Bereichen (B) außerhalb des Scharniers im Wesentlichen gerade verlaufen und zwischen den einzelnen Stoppfäden (11) so große Zwischenräume bilden, dass das Kunststoffmaterial des Abdeckungsbereichs in diesen Zwischenräumen Halt findet.

8. Abdeckung nach einem der Ansprüche 3 bis 7, **dadurch gekennzeichnet, dass** im Bereich (A) des Scharniers die Stoppfäden (11) innerhalb des textilen Flächenelements einen den Scharnierbereich (A) überdeckenden schmalen, zur Scharnierachse (13) parallelen Streifen hoher Fadendichte bilden.

9. Abdeckung nach einem der Ansprüche 3 bis 8, **dadurch gekennzeichnet, dass** zwei oder mehr unterschiedliche Arten von Opferfäden (12) im textilen Flächenelement bestehen mit unterschiedlicher Länge und/oder Stärke, so dass bei dem Öffnen und Drehen des Aufreißbereichs (2) zumindest eine Opferfadenart früher reißt als eine andere Opferfadenart.

10. Abdeckung nach Anspruch 9, **dadurch gekennzeichnet, dass** bei drei oder mehr unterschiedlichen Arten von Opferfadenarten die Opferfadenarten beim Öffnen zeitlich nacheinander reißen.

11. Abdeckung nach einem der vorherigen Ansprüche, **dadurch gekennzeichnet, dass** das textile Flächenelement mit einer Beschichtung insbesondere einem Vlies oder Folie versehen insbesondere verklebt ist.

## Claims

1. Rollover member cover (4) of a deployable rollover member of a motor vehicle (1), wherein at least one tear-open region (2) which in the torn-open state exposes a passage opening for the rollover member or rollover members (1) is disposed above the rollover member (1) in the cover (1), and wherein the tear-open region (2) by way of at least one periphery forms a hinge (5) and the peripheries or peripheral regions of the tear-open region that are located outside the hinge form predetermined breaking lines, **characterized in that**
- the tear-open region/regions (2) is/are hinged on the material of the cover (4) that surrounds the tear-open region (2) by way of at least one textile hinge (5);
- in the cover of plastics material a textile planar element is embedded in the plastics material at least in the region close to the hinge and in the hinge region; and
- the cover (4) in addition to the rollover member/members (1) covers a convertible soft top, a motor vehicle roof top, or a part/parts of a motor vehicle roof top retracted into a rear region.

2. Cover according to Claim 1, **characterized in that** at least one tear-open region (2) for each rollover member (1) is disposed in the cover.

3. Cover according to Claim 1, **characterized in that** the cover (4) and the tear-open region (2) comprise a planar material of plastics material that supports the textile planar material which has sacrificial threads (12) which run so as to be substantially orthogonal or oblique in relation to the hinge axis and, when the rollover member (1) is triggered, rupture in the region (A) of the hinge (5).

4. Cover according to one of the preceding claims, **characterized in that** the textile planar element has stop threads (11) which, when the rollover member is triggered, permit pivoting of the tear-open region (2) about the pivot axis (3) without rupturing in the region of the hinge (5) or of the linking structure, so as to securely hold the tear-open region (2) after the rollover member has been triggered.

5. Cover according to Claim 4, **characterized in that** the non-rupturing stop threads (11) are disposed so as to be compressed in an undulating and/or looped manner only in the region (A) of the hinge (5), said non-rupturing stop threads (11) in said region (A) thus having a greater length than in the regions (B) outside the hinge.

6. Cover according to Claim 5, **characterized in that** the region compressed in an undulating and/or looped manner is located in and/or below the plane of the textile planar element.

7. Cover according to one of Claims 3 to 6, **characterized in that** the non-rupturing stop threads (11) in the regions (B) outside the hinge run in a substantially straight manner and between the individual stop threads (11) form intermediate spaces so large that the plastics material of the cover region gains hold in said intermediate spaces.

8. Cover according to one of Claims 3 to 7, **characterized in that** the stop threads (11) in the region (A) of the hinge within the textile planar element form a narrow strip of high thread density that covers the hinge region (A) and is parallel with the hinge axis (13).

9. Cover according to one of Claims 3 to 8, **characterized in that** two or more different types of sacrificial threads (12) of dissimilar lengths and/or thicknesses exist in the textile planar element such that in the opening and rotating of the tear-open region (2) at least one type of sacrificial thread ruptures earlier than another type of sacrificial thread.

10. Cover according to Claim 9, **characterized in that**, in the case of three or more different types of sacrificial threads, the types of sacrificial threads when being opened rupture in a temporally successive manner.

11. Cover according to one of the preceding claims, **characterized in that** the textile planar element is provided with a coating, in particular is adhesively bonded to, in particular a non-woven or a film/foil.

## Revendications

1. Revêtement (4) pour un arceau de sécurité (1) relevable d'un véhicule automobile,
dans lequel au moins une zone de déchirure (2) qui à l'état déchiré libère une ouverture permettant la traversée du ou des arceaux de sécurité (1) est disposée dans le revêtement (4) au-dessus du arceau de sécurité (1) et
la zone de déchirure (2) formant une charnière (5) avec au moins un bord et les bords ou bordures de la zone de déchirure situés à l'extérieur de la charnière formant des lignes de rupture préférentielle, **caractérisé**
- **en ce que** la ou les zones de déchirure (2) sont articulées par l'intermédiaire d'au moins une charnière textile (5) sur le matériau du revêtement (4) qui entoure la zone de déchirure (2),
- **en ce que** dans le revêtement en matière synthétique, un élément textile plat est incorporé dans la matière synthétique à proximité de la charnière et dans la zone occupée par la charnière et
- **en ce que** le revêtement (4) recouvre en plus du ou des arceaux de sécurité (1) un capot de cabriolet rétracté dans la partie arrière, le toit du véhicule automobile ou une ou plusieurs parties du toit du véhicule automobile.

2. Revêtement selon la revendication 1, **caractérisé en ce qu'**au moins une zone de déchirure (2) est disposée dans le revêtement pour chaque arceau de sécurité (1).

3. Revêtement selon la revendication 1, **caractérisé en ce que** le revêtement (4) et la zone de déchirure (2) présentent un matériau plat en matière synthétique qui porte un élément textile plat présentant des fils sacrifiés (12) qui s'étendent essentiellement perpendiculairement ou obliquement par rapport à l'axe de la charnière et qui se déchirent dans la partie (A) de la charnière (5) lors du déclenchement de l'arceau de sécurité (1).

4. Revêtement selon l'une des revendications précédentes, **caractérisé en ce que** l'élément textile plat présente des fils d'arrêt (11) qui permettent lors du déclenchement de l'arceau de sécurité un pivotement de la zone de déchirure (2) autour de l'axe (13) de la charnière sans se déchirer au niveau de la charnière (5) ou de la structure de liaison, pour maintenir en toute sécurité la zone de déchirure (2) après le déclenchement de l'arceau de sécurité.

5. Revêtement selon la revendication 4, **caractérisé en ce que** les fils d'arrêt (11) ne se déchirant pas sont disposés de manière compacte en ondulations et/ou en boucles dans la partie (A) de la charnière (5) et présentent ainsi en cet emplacement une longueur plus grande que dans les parties (B) situées à l'extérieur de la charnière.

6. Revêtement selon la revendication 5, **caractérisé en ce que** la partie compacte en forme d'ondulations et/ou de boucles s'étend dans le plan de l'élément textile plat et/ou en dessous de celui-ci.

7. Revêtement selon l'une des revendications 3 à 6, **caractérisé en ce que** les fils d'arrêt (11) ne se déchirant pas s'étendent essentiellement en ligne droite dans les parties (B) situées à l'extérieur de la charnière et forment entre les différents fils d'arrêt (11) des espaces intermédiaires suffisamment grands pour que la matière synthétique du revêtement soit retenue dans ces espaces intermédiaires.

8. Revêtement selon l'une des revendications 3 à 7, **caractérisé en ce que** dans la partie (A) de la charnière, les fils d'arrêt (11) forment à l'intérieur de l'élément textile plat un étroit ruban recouvrant la partie (A) de la charnière, parallèle à l'axe (13) de la charnière et dont la densité de fils est plus élevée.

9. Revêtement selon l'une des revendications 3 à 8, **caractérisé en ce que** deux ou plusieurs types de fils sacrifiés (12) sont présents dans l'élément textile plat et présentent des longueurs et/ou des épaisseurs différentes, de telle sorte que lors de l'ouverture et de la rotation de la zone de déchirure (2), au moins un type de fil sacrifié se déchire plus tôt qu'un autre type de fil sacrifié.

10. Revêtement selon la revendication 9, **caractérisé en ce que** lorsqu'il existe trois types différents ou plus de types de fils sacrifiés, les types de fils sacrifiés se déchirent successivement lors de l'ouverture.

11. Revêtement selon l'une des revendications précédentes, **caractérisé en ce que** l'élément textile plat est doté d'un recouvrement, en particulier d'un feutre ou d'un film, en particulier par collage.
